# EUROPEAN PATENT APPLICATION

(11) **EP 3 125 400 A2**
(43) Date of publication of application: **01.02.2017**
(21) Application number: 16180426.5
(22) Date of filing: 20.07.2016
(51) Int. Cl.: H02J 7/00, H01M 10/44

(54) **METHOD AND DEVICE FOR POWER CHARGING**

(30) Priority: 27.07.2015 CN 201510446546
(71) Applicant: Xiaomi Inc., Beijing 100085 (CN)
(72) Inventor: LEI, Zhenfei, Haidian District, Beijing 100085 (CN); SUN, Wei, Haidian District, Beijing 100085 (CN); WANG, Xiangdong, Haidian District, Beijing 100085 (CN)
(74) Representative: Reeve, Nicholas Edward

(57) **Abstract**

Method and device for power charging are provided. The method may include: establishing (S201) a connection of a first electronic device with a second electronic device; acquiring (S202), by the second electronic device, real-time charged voltage information of the first electronic device; and controlling (S203), during charging the first electronic device by the second electronic device, the second electronic device to output a charging voltage to the first electronic device according to the real-time charged voltage information of the first electronic device to charge the first electronic device. With the method, voltage conversion during charging can be done once merely within the second electronic device. Comparing with the method for power charging that needs voltage conversions both in the first and second electronic devices, this removes voltage conversion within the first electronic device, and thereby power consumption during voltage conversion can be reduced and efficiency of power charging can be improved.

## Description

### FIELD

The present disclosure generally relates to the field of electronic technology, and more particularly, to a method and device for power charging.

### BACKGROUND

With development of electronic technology, electronic devices such as a mobile phone and a tablet computer have become indispensable tools for people's lives, as well as for working anytime and anywhere. In order that the usage of an electronic device is not limited to a fixed power supply, a rechargeable battery is widely provided on an electronic device as a power supply. However, usage of a rechargeable battery relies on charging of the battery, so there emerges a critical technical issue of how to conveniently and efficiently charge a battery.

At present, there is a method for two electronic devices to charge each other. In the method, both a first electronic device and a second electronic device are provided with a battery. The method for charging includes the following steps: converting, by the first electronic device though its power management module, a voltage outputted from a battery of the first electronic device to a fixed voltage, the first electronic device being a charging device; inputting the fixed voltage to the second electronic device, the second electronic device being a device to be charged; acquiring in real time, by the second electronic device, a required charging voltage according to charged state of a battery of the second electronic device, the required charging voltage varying with the charged state of the battery of the second electronic device; converting, by the second electronic device though its power management module, the fixed voltage to the required charging voltage such that the second electronic device is charged with the converted charging voltage. As can be seen, there are two voltage conversions in the method for charging, in which one is performed by the first electronic device, and the other is performed by the second electronic device.

### SUMMARY OF THE INVENTION

According to a first aspect of the present disclosure, there is provided a method for power charging, including: establishing a connection of a first electronic device with a second electronic device; acquiring, by the second electronic device based on the connection, real-time charged voltage information of the first electronic device, the real-time charged voltage information varying with charged state of the first electronic device; and controlling, during charging the first electronic device by the second electronic device, the second electronic device to output a charging voltage to the first electronic device according to the real-time charged voltage information of the first electronic device to charge the first electronic device.

In an embodiment of the present disclosure, the establishing a connection of a first electronic device with a second electronic device ma include: establishing the connection of the first electronic device with the second electronic device by using designated interfaces provided respectively on the first electronic device and the second electronic device and a designated type of data line between the first electronic device and the second electronic device.

In an embodiment of the present disclosure, the first electronic device and the second electronic device both are mobile terminals, or the first electronic device is a mobile terminal and the second electronic device is a mobile power supply device.

According to a second aspect of the present disclosure, there is provided a method for power charging, including: establishing a connection of a first electronic device with a second electronic device; detecting in real time charged state of the first electronic device and acquiring real-time charged voltage information of the first electronic device during the first electronic device being charged by the second electronic device, the real-time charged voltage information varying with the charged state of the first electronic device; and transmitting in real time, based on the connection, the real-time charged voltage information of the first electronic device to the second electronic device such that the second electronic device controls a charging voltage outputted from the second electronic device to charge the first electronic device.

In an embodiment of the present disclosure, the establishing a connection of a first electronic device with a second electronic device may include: establishing the connection of the first electronic device with the second electronic device by using designated interfaces provided respectively on the first electronic device and the second electronic device and a designated type of data line between the first electronic device and the second electronic device.

In an embodiment of the present disclosure, the detecting in real time charged state of the first electronic device and acquiring real-time charged voltage information of the first electronic device may include: acquiring a preset current value multiplied by a present equivalent resistance of a battery as the real-time charged voltage information of the first electronic device when the charged state indicates that a present voltage value of the battery is smaller than a preset value, the equivalent resistance of the battery varying with the charged state of the first electronic device; and acquiring a preset voltage value as the real-time charged voltage information of the first electronic device when the charged state indicates that a present voltage value of the battery is greater than a preset value.

According to a third aspect of the present disclosure, there is provided a device for power charging, including: a connection module configured to establish a connection of a first electronic device with a second electronic device; an acquisition module configured to acquire, based on the connection, real-time charged voltage information of the first electronic device, real-time charged voltage information varying with charged state of the first electronic device; and a control module configured to control, during charging the first electronic device, the device to output a charging voltage to the first electronic device according to the real-time charged voltage information of the first electronic device to charge the first electronic device.

In an embodiment of the present disclosure, the connection module is further configured to establish the connection of the first electronic device with the second electronic device by using designated interfaces provided respectively on the first electronic device and the second electronic device and a designated type of data line between the first electronic device and the second electronic device.

In an embodiment of the present disclosure, the first electronic device and the second electronic device both are mobile terminals, or the first electronic device is a mobile terminal and the second electronic device is a mobile power supply device.

According to a fourth aspect of the present disclosure, there is provided a device for power charging, including: a connection module configured to establish a connection of a first electronic device with a second electronic device; an acquisition module configured to detect in real time charged state of the first electronic device and acquire real-time charged voltage information of the first electronic device during the first electronic device being charged by the second electronic device, the real-time charged voltage information varying with the charged state of the first electronic device; and a transmission module configured to transmit in real time, based on the connection, the real-time charged voltage information of the first electronic device to the second electronic device such that the second electronic device controls a charging voltage outputted from the second electronic device to charge the first electronic device.

In an embodiment of the present disclosure, the connection module is further configured to establish the connection of the first electronic device with the second electronic device by using designated interfaces provided respectively on the first electronic device and the second electronic device and a designated type of data line between the first electronic device and the second electronic device.

In an embodiment of the present disclosure, the acquisition module is further configured to acquire a preset current value multiplied by a present equivalent resistance of a battery as the real-time charged voltage information of the first electronic device when the charged state indicates that a present voltage value of the battery is smaller than a preset value, the equivalent resistance of the battery varying with the charged state of the first electronic device, and acquire a preset voltage value as the real-time charged voltage information of the first electronic device when the charged state indicates that a present voltage value of the battery is greater than a preset value.

According to a fifth aspect of the present disclosure, there is provided an electronic device, comprising: a processor; a memory for storing instructions executable by the processor, wherein the processor is configured to: establish a connection with a first electronic device, acquire, based on the connection, real-time charged voltage information of the first electronic device, the real-time charged voltage information varying with charged state of the first electronic device, and control, during charging the first electronic device, the electronic device to output a charging voltage to the first electronic device according to the real-time charged voltage information of the first electronic device to charge the first electronic device.

According to a sixth aspect of the present disclosure, there is provided an electronic device, comprising: a processor; a memory for storing instructions executable by the processor, wherein the processor is configured to: establish a connection with a second electronic device, detect in real time charged state of the electronic device and acquiring real-time charged voltage information of the electronic device during the electronic device being charged by the second electronic device, the real-time charged voltage information varying with charged state of the electronic device, and transmit in real time, based on the connection, the real-time charged voltage information to the second electronic device such that the second electronic device controls a charging voltage outputted from the second electronic device to charge the electronic device.

The technical solutions provided in the embodiments of the disclosure may provide at least some of the following beneficial effects.

In the methods provided in the embodiment of the disclosure, by establishing a connection of a first electronic device with a second electronic device; acquiring, by the second electronic device based on the connection, real-time charged voltage information of the first electronic device, the real-time charged voltage information varying with charged state of the first electronic device; and controlling, during charging the first electronic device by the second electronic device, the second electronic device to output a charging voltage to the first electronic device according to the real-time charged voltage information of the first electronic device to charge the first electronic device, voltage conversion during charging can be done once merely within the second electronic device. Comparing with the method for power charging that needs voltage conversions both in the first and second electronic devices, this removes the procedure of voltage conversion within the first electronic device, and thereby power consumption during voltage conversion can be reduced and efficiency of power charging can be improved.

It is to be understood that both the forgoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram illustrating varying of various parameters during power charging for a battery.
Fig. 2 is a flow diagram illustrating a method for power charging according to an exemplary embodiment.
Fig. 3 is a flow diagram illustrating a method for power charging according to an exemplary embodiment.
Fig. 4 is a schematic diagram illustrating interaction of two parties involved in the method for power charging according to an exemplary embodiment.
Fig. 5 is a block diagram illustrating a device for power charging according to another exemplary embodiment.
Fig. 6 is a block diagram illustrating a device for power charging according to an exemplary embodiment.
Fig. 7 is a block diagram illustrating an electronic device 700 according to an exemplary embodiment.

### DETAILED DESCRIPTION

In order for clearly clarifying the purposes, the technical solutions and advantages of the disclosure, some implementations of the disclosure will be further described in details by reference to the accompanying drawings.

For convenience of understanding, a general procedure of power charging for a battery is described as below.

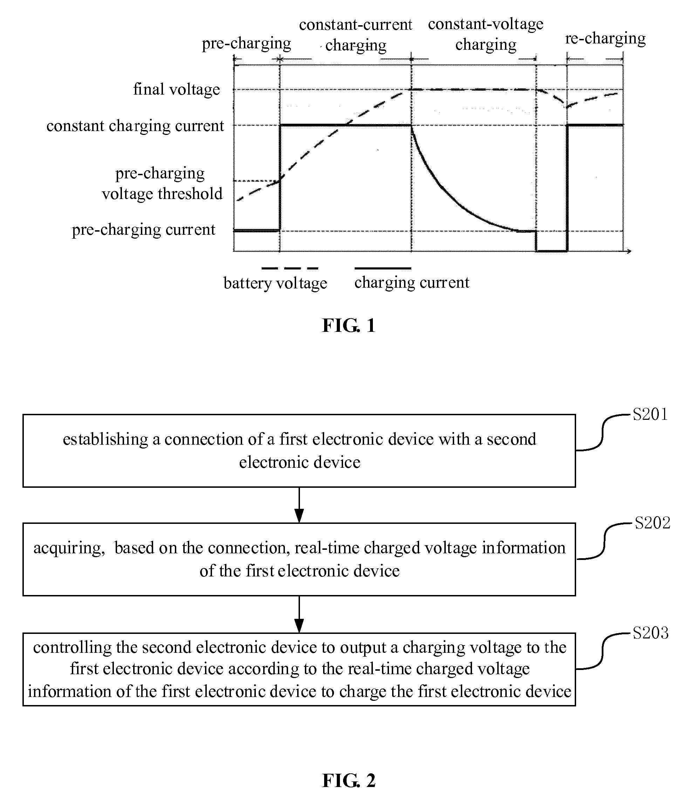

Fig. 1 is a schematic diagram illustrating varying of various parameters during power charging for a battery. The various parameters include battery voltage and charging current. In Fig. 1, the horizontal axis denotes charging time, and the vertical axis denotes strength of the various parameters, and the dashes line represents battery voltage, while the solid line represents charging current. In order to improve efficiently of the charging while keeping the battery from damaging, a procedure of charging for a battery generally may be divided into four stages: trickle charging (i.e. pre-charging with low voltage), constant-current charging, constant-voltage charging, and charging termination.

The four stages will be described in details as below.

Trickle Charging: trickle charging is performed to pre-charge a completely discharged battery with a small current to protect the battery. Trickle charging may be employed when battery voltage is lower than a pre-charging voltage threshold. The current of trickle charging generally is one-tenth of the current of constant-current charging, i.e. 0.1C. 'C' is a means for representing current by reference to nominal capacity of a battery. For example, in case that a battery has a nominal capacity of 1000mAh, 1C denotes a charging current of 1000mA. Accordingly, 0.1C of the trickle charging represents 100mA. The procedure of trickle charging is an optional procedure.

Constant-current Charging: constant-current charging is performed with a higher current when battery voltage rises above the pre-charging voltage threshold. The current of constant-current charging generally is within a range from 0.2C to 1.0C. During the procedure of constant-current charging, the equivalent resistance of the battery in the charger circuit increases gradually. Charging current equals charging voltage divided by the equivalent resistance, so charging voltage should be adjusted in real time during the procedure in order to ensure charging current is constant even if the equivalent resistance increase gradually. In the procedure of constant-current charging, charging voltage should be increase gradually.

Constant-voltage Charging: the constant-current charging is finished when the battery voltage rises to a final voltage, and then t constant-voltage charging is started. The final voltage generally is 3.0V to 4.2V In the procedure of constant-voltage charging, charging voltage should be adjusted in real time to ensure it is fixed value. In this procedure, the equivalent resistance of the battery in the charger circuit increases continuously, while charging current decreases gradually from a largest value because charging current is in inverse proportion to the equivalent resistance. When charging current decreases to 0.01C, the procedure of constant-voltage charging finished.

Charging Termination: upon the procedure of constant-voltage charging finishes, entire charging is terminated. However, in some cases, charging is started again when battery voltage is detected to be lower than a re-charging voltage threshold.

In the procedures of constant-current charging and constant-voltage charging, input voltage of the electronic device generally is a fixed value, so the above described adjustment of charging voltage may be performed by a power management module of the electronic device itself.

Fig. 2 is a flow diagram illustrating a method for power charging according to an exemplary embodiment. As shown in Fig. 2, the method may include the following steps.

In step S201, a connection of a first electronic device is established with a second electronic device.

In step S202, the second electronic device acquires, based on the connection, real-time charged voltage information of the first electronic device, wherein the real-time charged voltage information varies with charged state of the first electronic device.

In step S203, the second electronic device, during charging the first electronic device by the second electronic device, is controlled to output a charging voltage to the first electronic device according to the real-time charged voltage information of the first electronic device to charge the first electronic device.

In an embodiment of the present disclosure, the establishment of a connection of a first electronic device with a second electronic device may include: establishing the connection of the first electronic device with the second electronic device by using designated interfaces provided respectively on the first electronic device and the second electronic device and a designated type of data line between the first electronic device and the second electronic device.

In an embodiment of the present disclosure, both the first electronic device and the second electronic device may be mobile terminals, or the first electronic device may be a mobile terminal and the second electronic device may be a mobile power supply device.

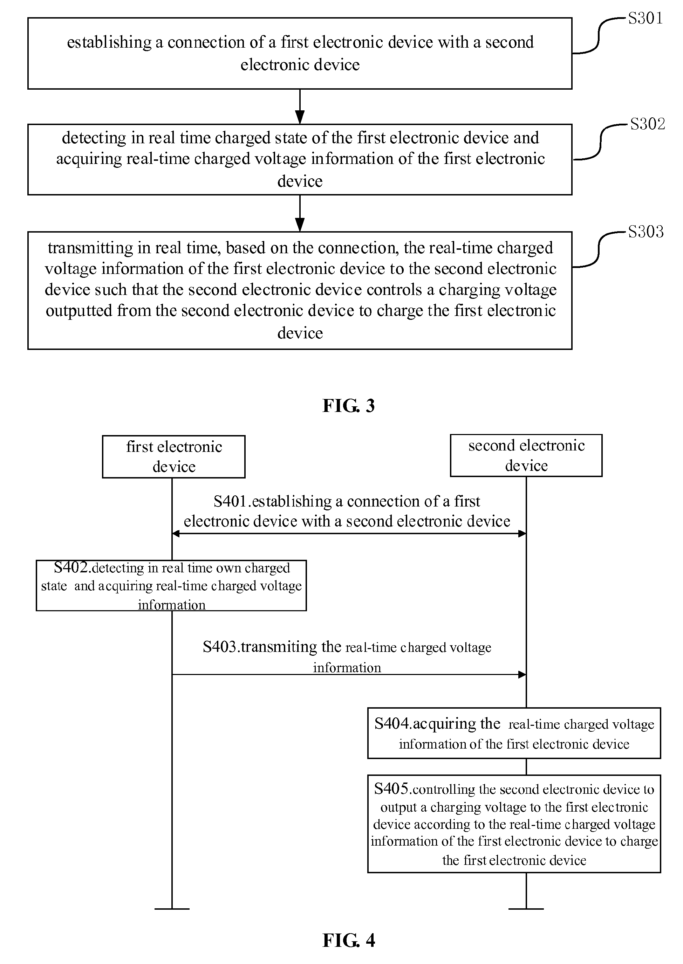

Fig. 3 is a flow diagram illustrating a method for power charging according to an exemplary embodiment. As shown in Fig. 3, the method for power charging may include the following steps.

In step S301, a connection of a first electronic device is established with a second electronic device.

In step S302, charged state of the first electronic device is detected in real time and real-time charged voltage information of the first electronic device is acquired during the first electronic device being charged by the second electronic device, wherein the real-time charged voltage information varies with the charged state of the first electronic device.

In step S303, the real-time charged voltage information of the first electronic device to the second electronic device is transmitted in real time based on the connection such that the second electronic device controls a charging voltage outputted from the second electronic device to charge the first electronic device.

In an embodiment of the present disclosure, the establishment of a connection of a first electronic device with a second electronic device may include: establishing the connection of the first electronic device with the second electronic device by using designated interfaces provided respectively on the first electronic device and the second electronic device and a designated type of data line between the first electronic device and the second electronic device.

In an embodiment of the present disclosure, the detection in real time of charged state of the first electronic device and acquisition of real-time charged voltage information of the first electronic device may include: acquiring a preset current value multiplied by a present equivalent resistance of a battery as the real-time charged voltage information of the first electronic device when the charged state indicates that a present voltage value of the battery is smaller than a preset value, wherein the equivalent resistance of the battery varies with the charged state of the first electronic device; and acquiring a preset voltage value as the real-time charged voltage information of the first electronic device when the charged state indicates that a present voltage value of the battery is greater than a preset value.

Fig. 4 is a schematic diagram illustrating interaction of two parties involved in the method for power charging according to an exemplary embodiment. As shown in Fig. 4, the method may include the following steps.

In step S401, a connection of a first electronic device is established with a second electronic device.

Both the first electronic device and the second electronic device are provided with a battery. In an embodiment, descriptions are provided by taking the first electronic device being a device to be charged and the second electronic device being used for charging the first electronic device as an example.

The first electronic device and the second electronic device may be same type of electronic devices or may be different type of electronic devices. For example, both the first electronic device and the second electronic device are mobile phones, or the first electronic device is a mobile phone and the second electronic device is a tablet computer, or the first electronic device is a mobile phone and the second electronic device is a mobile charger.

The establishment of a connection of a first electronic device with a second electronic device may include: establishing the connection of the first electronic device with the second electronic device by using designated interfaces provided respectively on the first electronic device and the second electronic device and a designated type of data line between the first electronic device and the second electronic device.

The established connection may include data connection and power connection. In an embodiment, the designated interfaces may be USB Type C (Universal Serial Bus Type C) interfaces, and the designated data line may be a USB Type C data line. The USB Type C interface and data line respectively have a structure of quadded cable wherein two of four cables are used as serial data channel for establishing data connection, and the other two cables are used as power lines for establishing power connection.

The connection established with USB Type C interfaces and data line has a characteristic of common usage both in positive and negative directions, so in the method provided in the embodiment, the first electronic device and the second electronic device may be charged with each other. For example, in an embodiment of the disclosure, the first electronic device may be a device to be charged and the second device may be used for charging the first electronic device, while in another embodiment of the disclosure, some configuration may be provided such that the second electronic device become the device to be charged and the first electronic device is used to charge the second electronic device.

In step S402, the first electronic device detects in real time charged state of the first electronic device and acquires real-time charged voltage information of the first electronic device.

After establishment of the connection, a procedure of charging the first electronic device by the second electronic device is started. During this procedure, the first electronic device detects in real time its own charged state through a power management module thereof. The charged state indicates battery voltage of the first electronic device. The detection in real time may specifically include reading in real time the battery voltage of the first electronic device. According to the stated state, real-time charged voltage information of the first electronic device may be acquired. The real-time charged voltage information may indicate a charging voltage required by the first electronic device currently. The real-time charged voltage information may vary with the charged state of the first electronic device.

In the embodiment, the first electronic device is charged with constant-current charging when the charged state indicates that a present voltage value of the battery of the first electronic device is smaller than a preset value. During the procedure of constant-current charging, charging current is maintained the same and the charging current may be set a preset current value according to actual requirements. For example, the preset current may be set as a value between 0.1C to 1.1C. During the procedure of constant-current charging, equivalent resistance of the battery varies with change in charged state. Based on the relationship that a voltage value equals to a current value multiplied with a resistance value, in the case that the resistance value varies in real time, the voltage value should be varied according to change in the resistance value in order to keep the current value unchanged. Thus, in order to ensure constant-current charging, the preset current value multiplied by the equivalent resistance value of the battery at present may be acquired as the real-time charged voltage information of the first electronic device.

In the procedure of charging, battery voltage increases gradually with change in the charged state, and when the charged state indicates that the present battery voltage of the first electronic device is greater than a preset value, the first electronic device is charged with constant-voltage charging. During the procedure of constant-voltage charging, charging voltage is maintained the same. The charging voltage may be set as a preset voltage value according to actual requirements. For example, the preset voltage value may be set as a value between 2.9V to 4.3V. In the procedure, the preset voltage value may be acquired as the real-time charging voltage information.

In step S403, the real-time charged voltage information of the first electronic device is transmitting in real time to the second electronic device.

The first electronic device, after acquiring its own real-time charging voltage information, transmits the real-time charging voltage information to the second electronic device such that the second electronic device controls a charging voltage outputted from the second electronic device to charge the first electronic device.

In the embodiment, the real-time charging voltage information is transmitted to the second electronic device in an isochronous transmission mode through the data connection provided in step S401 with the USB Type C interfaces and data line. It should be noted that the manner for transmitting the real-time charging voltage information may include periodic transmission of data blocks and any others, which is not limited thereto.

In step S404, the second electronic device acquires the real-time charging voltage information of the first electronic device.

The second electronic device, based on the data connection established in step S401, acquires the real-time charging voltage information of the first electronic device, wherein the real-time charging voltage information varies with the charged state of the first electronic device.

In step S405, the second electronic device controls, according to the real-time charging voltage information of the first electronic device, a charging voltage outputted from the second electronic device to charge the first electronic device.

After acquiring the real-time charging voltage information of the first electronic device, the second electronic device converts its own output voltage to a charging voltage required by the first electronic device, and output the charging voltage to the first electronic device.

In the embodiment, after acquiring the real-time charging voltage information of the first electronic device, the second electronic device converts its own present battery voltage to the charging voltage through its own power management module. For example, in the case where the present battery voltage of the second electronic device is 3V, if the charging voltage information indicates that the first electronic device currently requires a charging voltage of 3.3V, the second electronic device converts the voltage of 3V to 3.3V through its own power management module and uses the voltage of 3.3V as output charging voltage. The second electronic device then outputs the charging voltage to the first electronic device based on the power connection established in step S401 with USB Type C interfaces and data line.

In the methods provided in the embodiment of the disclosure, by establishing a connection of a first electronic device with a second electronic device; acquiring, by the second electronic device, real-time charged voltage information of the first electronic device, the real-time charged voltage information varying with charged state of the first electronic device, and controlling, during charging the first electronic device by the second electronic device, the second electronic device to output a charging voltage to the first electronic device according to the real-time charged voltage information of the first electronic device to charge the first electronic device, voltage conversion during charging can be done once merely within the second electronic device. Comparing with the method for power charging that needs voltage conversions both in the first and second electronic devices, this removes the procedure of voltage conversion within the first electronic device, and thereby power consumption during voltage conversion can be reduced and efficiency of power charging can be improved.

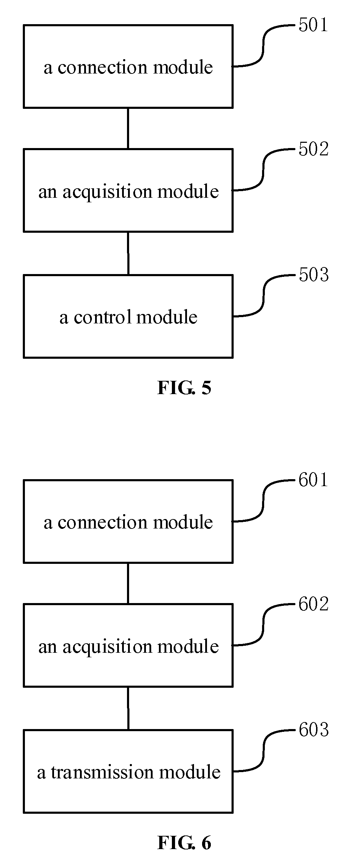

Fig. 5 is a block diagram illustrating a device for power charging according to another exemplary embodiment. By referring to Fig.5, the device may include a connection module 501, an acquisition module 502 and a control module 503.

The connection module 501 is configured to establish a connection of a first electronic device with a second electronic device.

The acquisition module 502 is configured to acquire, based on the connection, real-time charged voltage information of the first electronic device, wherein the real-time charged voltage information varies with charged state of the first electronic device.

The control module 503 is configured to control, during charging the first electronic device, the device to output a charging voltage to the first electronic device according to the real-time charged voltage information of the first electronic device to charge the first electronic device.

In an embodiment of the present disclosure, the connection module is further configured to establish the connection of the first electronic device with the second electronic device by using designated interfaces provided respectively on the first electronic device and the second electronic device and a designated type of data line between the first electronic device and the second electronic device.

In an embodiment of the present disclosure, both the first electronic device and the second electronic device may be mobile terminals, or the first electronic device may be a mobile terminal and the second electronic device may be a mobile power supply device.

Fig. 6 is a block diagram illustrating a device for power charging according to an exemplary embodiment. By referring to Fig.6, the device may include a connection module 601, an acquisition module 602 and a transmission module 603.

The connection module 601 is configured to establish a connection of a first electronic device with a second electronic device.

The acquisition module 602 is configured to detect in real time charged state of the first electronic device and acquire real-time charged voltage information of the first electronic device during the first electronic device being charged by the second electronic device, wherein the real-time charged voltage information varies with the charged state of the first electronic device.

The transmission module 603 is configured to transmit in real time, based on the connection, the real-time charged voltage information of the first electronic device to the second electronic device such that the second electronic device controls a charging voltage outputted from the second electronic device to charge the first electronic device.

In an embodiment of the present disclosure, the connection module is further configured to establish the connection of the first electronic device with the second electronic device by using designated interfaces provided respectively on the first electronic device and the second electronic device and a designated type of data line between the first electronic device and the second electronic device.

In an embodiment of the present disclosure, the acquisition module is further configured to acquire a preset current value multiplied by a present equivalent resistance of a battery as the real-time charged voltage information of the first electronic device when the charged state indicates that a present voltage value of the battery is smaller than a preset value, wherein the equivalent resistance of the battery varies with the charged state of the first electronic device, and acquire a preset voltage value as the real-time charged voltage information of the first electronic device when the charged state indicates that a present voltage value of the battery is greater than a preset value.

In the methods provided in the embodiment of the disclosure, by establishing a connection of a first electronic device with a second electronic device; acquiring, by the second electronic device based on the connection, real-time charged voltage information of the first electronic device, the real-time charged voltage information varying with charged state of the first electronic device; and controlling, during charging the first electronic device by the second electronic device, the second electronic device to output a charging voltage to the first electronic device according to the real-time charged voltage information of the first electronic device to charge the first electronic device, voltage conversion during charging can be done once merely within the second electronic device. Comparing with the method for power charging that needs voltage conversions both in the first and second electronic devices, this removes the procedure of voltage conversion within the first electronic device, and thereby power consumption during voltage conversion can be reduced and efficiency of power charging can be improved.

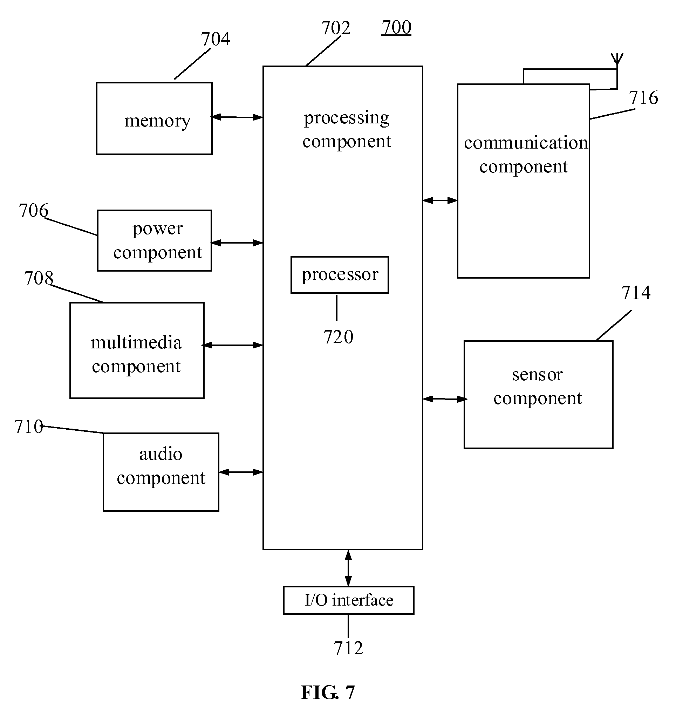

Fig. 7 is a block diagram illustrating an electronic device 700 according to an exemplary embodiment. For example, the device 700 may be a mobile phone, a computer, a digital broadcast terminal, a messaging device, a gaming console, a tablet, a medical device, an exercise equipment, a personal digital assistant, and the like.

Referring to Fig. 7, the devicde 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the device 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power for the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the device 700 is in an operation mode, such as a photographing mode or a video mode. Each of the front camera and the rear camera may be a fixed optical lens system or have optical focusing and zooming capability.

The audio component 710 is configured to output and/or input audio signals. For example, the audio component 710 includes a microphone ("MIC") configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, the peripheral interface modules being, for example, a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the device 700, relative positioning of components (e.g., the display and the keypad, of the device 700), a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of a nearby object without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the device 700 and other devices. The device 700 can access a wireless network based on a communication standard, such as WiFi, 2G, or 3G, or a combination thereof. In an exemplary embodiment, the communication component 716 receives a broadcast signal or broadcast associated information from an external broadcast management system via a broadcast channel. In an exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 704, executable by the processor 720 in the device 700, for performing the above-described methods. For example, the non-transitory computer-readable storage medium may be a ROM, a RAM, a CD-ROM, a magnetic tape, a floppy disc, an optical data storage device, and the like.

In an exemplary embodiment of the disclosure, there also is porvided a non-transitory computer readable storage medium having stored therein instructions that, when executed by a processor of a terminal, cause the terminal to perform a method for power charging as described above.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and examples be considered as exemplary only, with a true scope of the invention being indicated by the following claims.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

## Claims

1. A method for power charging, comprising:
establishing (S201) a connection of a first electronic device with a second electronic device;
acquiring (S202), by the second electronic device based on the connection, real-time charged voltage information of the first electronic device, the real-time charged voltage information varying with charged state of the first electronic device; and
controlling (S203), during charging of the first electronic device by the second electronic device, the second electronic device to output a charging voltage to the first electronic device according to the real-time charged voltage information of the first electronic device to charge the first electronic device.

2. The method of claim 1, wherein said establishing a connection of a first electronic device with a second electronic device comprises:
establishing the connection of the first electronic device with the second electronic device by using designated interfaces provided respectively on the first electronic device and the second electronic device and a designated type of data line between the first electronic device and the second electronic device.

3. The method of claim 1 or 2, wherein the first electronic device and the second electronic device both are mobile terminals, or the first electronic device is a mobile terminal and the second electronic device is a mobile power supply device.

4. A method for power charging, comprising:
establishing (S301) a connection of a first electronic device with a second electronic device;
detecting (S302) in real time the charged state of the first electronic device and acquiring real-time charged voltage information of the first electronic device during the first electronic device being charged by the second electronic device, the real-time charged voltage information varying with the charged state of the first electronic device; and
transmitting (S303) in real time, based on the connection, the real-time charged voltage information of the first electronic device to the second electronic device such that the second electronic device controls a charging voltage outputted from the second electronic device to charge the first electronic device.

5. The method of claim 4, wherein said establishing a connection of a first electronic device with a second electronic device comprises:
establishing the connection of the first electronic device with the second electronic device by using designated interfaces provided respectively on the first electronic device and the second electronic device and a designated type of data line between the first electronic device and the second electronic device.

6. The method of claim 4 or 5, wherein said detecting in real time the charged state of the first electronic device and acquiring real-time charged voltage information of the first electronic device comprises:
acquiring a preset current value multiplied by a present equivalent resistance of a battery as the real-time charged voltage information of the first electronic device when the charged state indicates that a present voltage value of the battery is smaller than a preset value, the equivalent resistance of the battery varying with the charged state of the first electronic device; and
acquiring a preset voltage value as the real-time charged voltage information of the first electronic device when the charged state indicates that a present voltage value of the battery is greater than a preset value.

7. An electronic device for power charging, comprising:
a connection module (501) configured to establish a connection of the electronic device with a further electronic device to be charged;
an acquisition module (502) configured to acquire, based on the connection, real-time charged voltage information of the further electronic device, the real-time charged voltage information varying with charged state of the further electronic device; and
a control module (503) configured to control, during charging of the further electronic device, the electronic device to output a charging voltage to the further electronic device according to the real-time charged voltage information of the further electronic device to charge the further electronic device.

8. The device of claim 7, wherein the connection module (501) is further configured to establish the connection with the further electronic device by using designated interfaces provided respectively on the electronic device and the further electronic device and a designated type of data line between the electronic device and the further electronic device.

9. The device of claim 7 or 8, wherein the electronic device and the further electronic device both are mobile terminals, or the further electronic device is a mobile terminal and the second electronic device is a mobile power supply device.

10. An electronic device for power charging, comprising:
a connection module (601) configured to establish a connection of the electronic device with a further electronic device from which a charging voltage is to be received for charging;
an acquisition module (602) configured to detect in real time charged state of the electronic device and acquire real-time charged voltage information of the electronic device during the charging of the electronic device by the further electronic device, the real-time charged voltage information varying with the charged state of the electronic device; and
a transmission module (603) configured to transmit in real time, based on the connection of the real-time charged voltage information of the electronic device to the further electronic device such that the further electronic device controls a charging voltage output from the further electronic device to charge the first electronic device.

11. The electronic device of claim 10, wherein the connection module (601) is further configured to establish the connection of the electronic device with the further electronic device by using designated interfaces provided respectively on the electronic device and the further electronic device and a designated type of data line between the electronic device and the further electronic device.

12. The device of claim 10, wherein the acquisition module (602) is further configured to:
acquire a preset current value multiplied by a present equivalent resistance of a battery as the real-time charged voltage information of the electronic device when the charged state indicates that a present voltage value of the battery is smaller than a preset value, the equivalent resistance of the battery varying with the charged state of the electronic device; and
acquire a preset voltage value as the real-time charged voltage information of the electronic device when the charged state indicates that a present voltage value of the battery is greater than a preset value.

13. An electronic device, comprising:
a processor (720);
a memory (704) for storing instructions executable by the processor;
wherein the processor is configured to:
establish a connection with a first electronic device,
acquire, based on the connection, real-time charged voltage information of the first electronic device, the real-time charged voltage information varying with charged state of the first electronic device, and
control, during charging the first electronic device, the electronic device to output a charging voltage to the first electronic device according to the real-time charged voltage information of the first electronic device to charge the first electronic device.

14. An electronic device, **characterized in** comprising:
a processor (720);
a memory (704) for storing instructions executable by the processor;
wherein the processor is configured to:
establish a connection with a second electronic device,
detect in real time charged state of the electronic device and acquiring real-time charged voltage information of the electronic device during the electronic device being charged by the second electronic device, the real-time charged voltage information varying with charged state of electronic device, and
transmit in real time, based on the connection, the real-time charged voltage information to the second electronic device such that the second electronic device controls a charging voltage outputted from the second electronic device to charge the electronic device.
